(19) Europäisches Patentamt
European Patent Office
Office européen des brevets

(11) **EP 2 989 612 B1**

(12) **FASCICULE DE BREVET EUROPEEN**

(45) Date de publication et mention
de la délivrance du brevet:
**18.11.2020 Bulletin 2020/47**

(51) Int Cl.:
***G06T 7/77*** *(2017.01)*    ***G06T 7/254*** *(2017.01)*
***G06T 7/277*** *(2017.01)*

(21) Numéro de dépôt: **14719329.6**

(22) Date de dépôt: **25.04.2014**

(86) Numéro de dépôt international:
**PCT/EP2014/058423**

(87) Numéro de publication internationale:
**WO 2014/174061 (30.10.2014 Gazette 2014/44)**

(54) **SUIVI VISUEL D'OBJET**

VISUELLE VERFOLGUNG EINES OBJEKTS

VISUAL TRACKING OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.04.2013 FR 1353838**

(43) Date de publication de la demande:
**02.03.2016 Bulletin 2016/09**

(73) Titulaires:
• **Sorbonne Université**
  **75006 Paris 6 (FR)**
• **Centre National de la Recherche Scientifique**
  **75794 Paris (FR)**

(72) Inventeurs:
• **REGNIER, Stéphane**
  **F-92270 Bois Colombes (FR)**
• **BENOSMAN, Ryad**
  **F-93500 Pantin (FR)**
• **PACORET, Cécile**
  **F-75011 Paris (FR)**
• **SIOHOI, Ieng**
  **F-93100 Montreuil (FR)**
• **ZHENJIANG, Ni**
  **F-94700 Maisons Alfort (FR)**

(74) Mandataire: **Brevalex**
  **95, rue d'Amsterdam**
  **75378 Paris Cedex 8 (FR)**

(56) Documents cités:
  **EP-A2- 1 164 537**

• **EWA PIATKOWSKA ET AL: "Spatiotemporal multiple persons tracking using Dynamic Vision Sensor", COMPUTER VISION AND PATTERN RECOGNITION WORKSHOPS (CVPRW), 2012 IEEE COMPUTER SOCIETY CONFERENCE ON, IEEE, 16 juin 2012 (2012-06-16), pages 35-40, XP032206755, DOI: 10.1109/CVPRW.2012.6238892 ISBN: 978-1-4673-1611-8**
• **Matthias Hofstetter: "Temporal Pattern-Based Active Marker Identification and Tracking Using a Dynamic Vision Sensor", , 31 janvier 2012 (2012-01-31), XP055096354, Extrait de l'Internet: URL:https://www.ini.uzh.ch/~tobi/wiki/lib/ exe/fetch.php?media=matthiashofstettersmas terthesis2012.pdf [extrait le 2014-01-14]**
• **SERRANO-GOTARREDONA R ET AL: "CAVIAR: A 45k Neuron, 5M Synapse, 12G Connects/s AER Hardware Sensory-Processing-Learning-ActuatingSystem for High-Speed Visual Object Recognition and Tracking", IEEE TRANSACTIONS ON NEURAL NETWORKS, IEEE SERVICE CENTER, PISCATAWAY, NJ, US, vol. 20, no. 9, 1 septembre 2009 (2009-09-01), pages 1417-1438, XP011294735, ISSN: 1045-9227**
• **"AER image filtering", PROC. OF SPIE, 22 mai 2007 (2007-05-22), XP040241190,**

• DELBRUCK TOBI ET AL: "ROBOTIC GOALIE WITH 3 MS REACTION TIME AT 4% CPU LOAD USING EVENT-BASED DYNAMIC VISION SENSOR", FRONTIERS IN NEUROSCIENCE, FRONTIERS RESEARCH FOUNDATION, CH , vol. 7, no. 223 1 November 2013 (2013-11-01), pages 1-7, XP003035694, ISSN: 1662-4548, DOI: 10.3389/FNINS.2013.00223 Retrieved from the Internet: URL:http://journal.frontiersin.org/article/10.3389/fnins.2013.00223/abstract [retrieved on 2013-11-21]

• M. Litzenberger ET AL: "Embedded Vision System for Real-Time Object Tracking using an Asynchronous Transient Vision Sensor", 2006 IEEE 12th Digital Signal Processing Workshop & 4th IEEE Signal Processing Education Workshop, 27 September 2006 (2006-09-27), pages 173-178, XP055605945, DOI: 10.1109/DSPWS.2006.265448

**EP 2 989 612 B1**

**Description**

**DOMAINE TECHNIQUE**

La présente invention concerne le suivi visuel d'objet, et plus particulièrement le suivi d'objet en temps réel à haute vitesse.

Le suivi d'objet trouve des applications dans de nombreux domaines, tels que la vidéosurveillance, la surveillance de trafic, l'analyse de mouvement, la réalité augmentée, la robotique et les interfaces homme-machine.

Le suivi d'objet en temps réel à haute vitesse, typiquement à une fréquence supérieure à 1kHz, s'applique plus particulièrement à la micro-robotique, à l'étude du comportement de micro-organismes, ou encore au domaine de l'haptique.

**ÉTAT DE LA TECHNIQUE ANTÉRIEURE**

L'acquisition de données à partir d'une caméra conventionnelle peut être très rapide, de l'ordre de plusieurs dizaines de kilohertz, mais la répétition d'informations similaires dans des images successives limite la vitesse de traitement de ces informations. Il faut donc limiter la quantité d'informations traitées. Cela se traduit en pratique par des limitations telles que le sous-échantillonnage de l'image ou la réduction du champ de l'image.

En outre, le traitement doit être très simple et souvent implémenté de manière matérielle plutôt que logicielle.

Le document « Spatiotemporal multiple persons tracking using dynamic vision sensor » de Piatkowska, Belbachir et Gelautz, Computer vision and pattern recognition workshops, 2012 IEEE Computer society conférence on, IEEE, expose un suivi de personne qui utilise une représentation adresse-événement. La méthode exposée accumule les évènements et met à jour les données toutes les 10 ms. Elle n'est donc pas suffisamment rapide pour fournir des résultats satisfaisants.

Le document intitulé « Temporal patern-based active marker identification and tracking using a dynamic vision sensor » de Matthias Hofstetter, 31 janvier 2012, divulgue un système d'identification et de suivi d'objet qui utilise un capteur de vision dynamique (dynamic vision sensor, DVS) dans lequel les données sont accumulées et stockées en mémoire.

Le document intitulé « CAVIAR : a 45k neuron, 5M synapse, 12G Connects/s AER hardware sensory-processing-learning-actuating system for high-speed visual object récognition and tracking », de Serrano-Gotarredona et al., IEEE Transactions on Neural Networks, vol. 20, n°9, 1er septembre 2009, concerne le suivi d'objet à haute vitesse et utilise une représentation adresse-événement asynchrone. La position d'un objet est mise à jour en déterminant une erreur dérivée d'une distribution de probabilité.

**EXPOSÉ DE L'INVENTION**

L'invention vise à résoudre les problèmes de la technique antérieure en fournissant un procédé de suivi visuel d'au moins un objet représenté par un nuage de points auxquels sont associées des informations, caractérisé en ce qu'il comporte les étapes de :

- réception de données représentant un jeu d'événements spatio-temporels,
- détermination de la probabilité qu'un événement du jeu appartienne au nuage de points représentant l'au moins un objet, pour chaque événement du jeu reçu,
- détermination du fait qu'un événement appartient ou non au nuage de points en fonction de la probabilité déterminée pour l'évènement considéré, pour chaque événement du jeu reçu,
- mise à jour des informations associées au nuage de point de l'au moins un objet, pour chaque événement pour lequel il a été déterminé à l'étape précédente qu'il appartient au nuage de points,
- calcul de la position, de la taille et de l'orientation de l'au moins un objet en fonction des informations mises à jour.

Grâce à l'invention, un suivi visuel d'objet à grande vitesse et sans réduction du champ, c'est-à-dire sur l'intégralité du champ, est possible. Le suivi d'objet est robuste.

L'invention ne nécessite aucune procédure de minimisation ni d'accumulation d'événements. Le procédé est purement basé événement.

L'invention permet de détecter et suivre un objet dans une scène non structurée.

L'invention permet de suivre simultanément plusieurs objets en mouvement dans une même scène. Dans ce cas, le suivi demeure très rapide car les fonctions de formes choisies sont remises à jour de façon événementielle et de façon indépendante les unes des autres.

L'invention s'applique en deux dimensions ou en trois dimensions.

Selon une caractéristique préférée, le jeu d'évènements spatio-temporels est fourni par un capteur asynchrone. Ce type de capteur fournit des données sous la forme d'évènements, en supprimant la redondance d'information, en réduisant le temps de latence et avec une dynamique temporelle élevée, par rapport aux capteurs conventionnels.

Selon une caractéristique préférée, la détermination du fait qu'un évènement appartient ou non au nuage de points comporte la comparaison de la probabilité déterminée pour l'évènement considéré avec un seuil prédéterminé.

Les calculs à effectuer sont simples et fournissent un résultat rapidement.

Selon une caractéristique préférée, la taille et l'orientation de l'au moins un objet sont calculées en modélisant l'objet par une ellipse et en calculant ses demis axes et son orientation. Là aussi, les calculs sont simples, rapides et fournissent un résultat précis.

Selon une caractéristique préférée, le procédé comporte en outre la détermination de la vitesse de l'au moins un objet.

Selon une caractéristique préférée, les étapes de réception, détermination, mise à jour et calcul sont effectuées de manière itérative.

Selon une caractéristique préférée, le procédé comporte en outre l'étape d'affichage de données représentatives de la position, de la taille et de l'orientation de l'au moins un objet calculées en fonction des informations mises à jour.

L'invention concerne aussi un dispositif de suivi visuel d'au moins un objet représenté par un nuage de points auxquels sont associées des informations, caractérisé en ce qu'il comporte :

- des moyens de réception de données représentant un jeu d'événements spatio-temporels,
- des moyens de détermination de la probabilité qu'un évènement du jeu appartienne au nuage de points représentant l'au moins un objet, pour chaque évènement du jeu reçu par les moyens de réception,
- des moyens de détermination du fait qu'un évènement appartient ou non au nuage de points en fonction de la probabilité déterminée pour l'évènement considéré, pour chaque évènement du jeu reçu par les moyens de réception,
- des moyens de mise à jour des informations associées au nuage de point de l'au moins un objet, pour chaque évènement pour lequel il a été déterminé il appartient au nuage de points,
- des moyens de calcul de la position, de la taille et de l'orientation de l'au moins un objet en fonction des informations mises à jour.

Le dispositif présente des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

**BRÈVE DESCRIPTION DES DESSINS**

D'autres caractéristiques et avantages apparaîtront à la lecture de la description suivante d'un mode de réalisation préféré donné à titre d'exemple non limitatif, décrit en référence aux figures dans lesquelles :

La figure 1 représente un procédé de suivi visuel d'au moins un objet selon la présente invention,
La figure 2 représente un signal fourni par un capteur asynchrone utilisé dans la présente invention,
La figure 3 représente la modélisation d'un objet selon la présente invention, et
La figure 4 représente un dispositif de suivi visuel d'au moins un objet selon la présente invention.

**EP 2 989 612 B1**

## EXPOSÉ DÉTAILLÉ DE MODES DE RÉALISATION PARTICULIERS

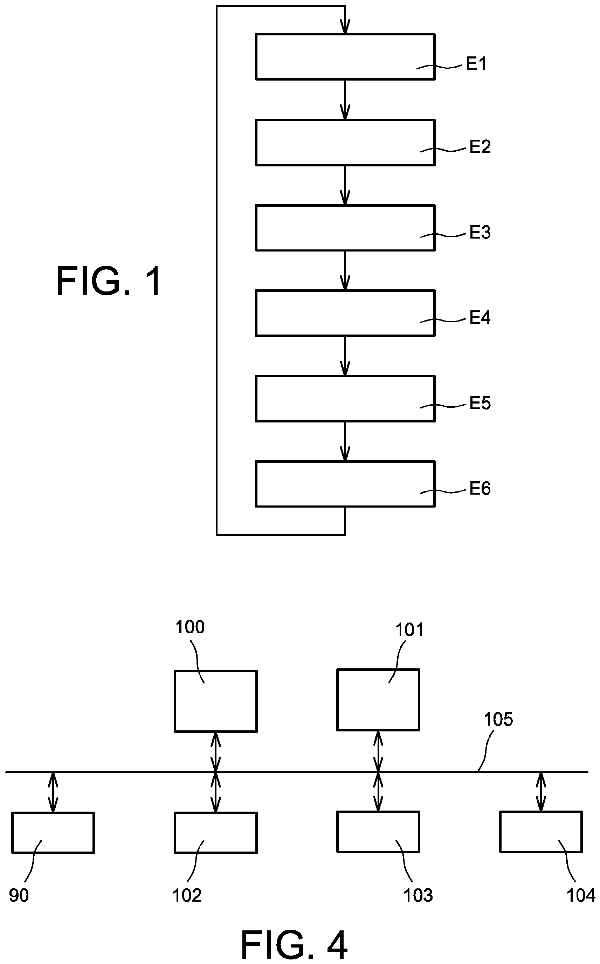

Selon un mode de réalisation préféré représenté à la **figure 1,** le procédé de suivi visuel d'au moins un objet comporte des étapes E1 à E6.

L'étape E1 est la réception de données représentant un jeu d'événements spatio-temporels.

Ces données sont fournies par un capteur asynchrone. Ce type de capteur permet d'acquérir des informations relatives à au moins une grandeur physique, telle que lumière, champ électrique, champ magnétique par exemple. Le capteur asynchrone fournit des données sous la forme d'évènements, en supprimant la redondance d'information, en réduisant le temps de latence et avec une dynamique temporelle élevée, par rapport aux capteurs conventionnels.

Un capteur asynchrone fournit un signal qui n'est pas échantillonné dans le temps selon une fréquence d'horloge prédéfinie, comme l'horloge des trames dans un signal vidéo classique. Un capteur asynchrone fournit une représentation adresse-évènement (AER, d'après l'anglais Address-Event Representation) d'une scène à visualiser. A chaque pixel correspond une séquence de signal basé sur évènement dépendant des variations d'intensité lumineuse correspondant à ce pixel. Par exemple, la séquence de signal asynchrone basé sur évènement pour un pixel comporte une séquence d'impulsions positives ou négatives positionnées dans le temps en fonction des variations d'au moins une grandeur physique comme la lumière concernant le pixel.

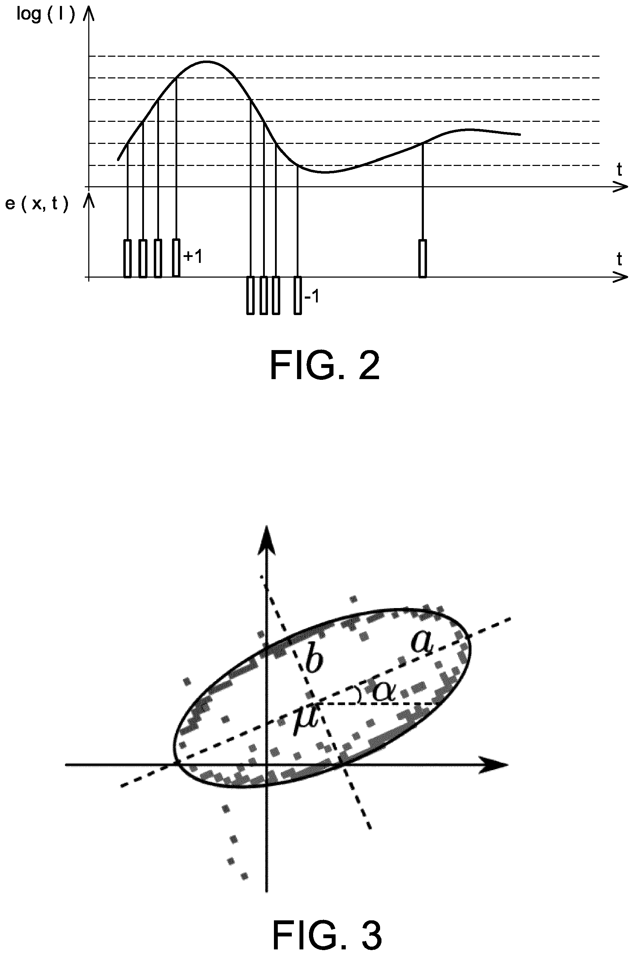

Comme illustré à la **figure 2,** pour chaque pixel considéré indépendamment, le capteur détecte un changement d'intensité logarithmique supérieur à un seuil par rapport à l'intensité liée à l'évènement précédent. Lorsqu'un tel changement est détecté, un évènement +1 ou -1 est généré, selon que l'intensité logarithmique augmente ou diminue.

Puisque le capteur est asynchrone, les évènements peuvent être fournis à une résolution temporelle très fine, par exemple 1 $\mu$s.

Un temps est associé à chaque événement. Ainsi, un évènement est mathématiquement représenté par e(x,t), où x est un vecteur de coordonnées représentant la localisation de l'évènement dans un repère spatial et t représente l'instant de l'évènement.

La valeur e(x,t) vaut +1 ou -1, comme exposée plus haut.

On suppose que l'on dispose de données représentant au moins un objet. Ces données sont sous la forme d'un nuage de points, où chaque point est un évènement tel que précédemment défini.

Il est à noter que les données représentant au moins un objet sont initialisées grâce à un maillage du plan focal par un ensemble de trackeurs gaussiens.

Comme il sera détaillé dans la suite, le nuage de points d'un objet d'indice i peut être modélisé par une distribution gaussienne bidimensionnelle dont la moyenne $\mu_i(t)$ indique la position de l'objet dans un repère et la matrice de covariance $\Sigma_i(t)$ est relative à sa taille et à sa position.

L'étape suivante E2 est la détermination de la probabilité qu'un évènement du jeu reçu à l'étape E1 appartienne à un nuage de points représentant un objet, pour chaque évènement du jeu reçu.

On considère le $i^{ème}$ objet, associé au $i^{ème}$ nuage de points, dont la moyenne $\mu_i(t) = [\mu_{i1}, \mu_{i2}]^T$ est un vecteur qui représente la position de l'objet à l'instant t dans un repère donné à deux dimensions, l'indice 1 étant affecté à l'axe des abscisses et l'indice 2 étant affecté à l'axe des ordonnées. La position de l'objet est la position du centre d'une ellipse modélisant cet objet.

La matrice de covariance $\Sigma_i(t)$ du $i^{ème}$ nuage de points vaut :

$$\Sigma_i(t) = \begin{bmatrix} \sigma_1^2 & \sigma_{12} \\ \sigma_{12} & \sigma_2^2 \end{bmatrix}$$

La probabilité qu'un évènement e(x,t) du jeu appartienne au $i^{ème}$ nuage de points vaut :

$$p_i(x) = (2\pi)^{-1} |\Sigma_i(t)|^{-\frac{1}{2}} e^{-\frac{1}{2}(x-\mu_i(t))^T \Sigma_i^{-1} (x-\mu_i(t))}$$

Dans cette expression, le vecteur $x = [x_1, x_2]^T$ est la position à l'instant t de l'évènement considéré dans le même repère bidimensionnel et $|\Sigma_i(t)|$ est le déterminant de la matrice de covariance.

A un instant t donné auquel un ou des évènements e(x,t) sont produits par le capteur asynchrone, la probabilité $p_i(x)$ est calculée pour tous les évènements produits à cet instant, et pour tous les objets. Il y a donc autant de probabilités $p_i(x)$ calculées à un instant donné t que de couples objet-évènement à cet instant.

L'étape suivante E3 est la détermination du fait qu'un évènement appartient ou non au nuage de points en fonction de la probabilité déterminée, pour chaque évènement pour lequel une probabilité $p_i(x)$ a été calculée à l'étape précédente.

Pour cela, la probabilité $p_i(x)$ est comparée à un seuil prédéterminé S qui dépend de l'éclairage. Le seuil S est une probabilité qui vaut par exemple 2,5%.

Si la probabilité $p_i(x)$ est inférieure au seuil S, alors l'évènement e(x,t) n'appartient pas à l'objet considéré.

Si la probabilité $p_i(x)$ est supérieure au seuil S, alors l'évènement e(x,t) appartient à l'objet considéré. Si plusieurs probabilités calculées pour l'évènement e(x,t) sont supérieures au seuil S, alors l'évènement e(x,t) appartient à l'objet pour lequel la probabilité est la plus grande.

L'étape suivante E4 est la mise à jour des informations associées au nuage de points de l'au moins un objet, lorsqu'il a été déterminé à l'étape précédente qu'au moins un évènement appartient au nuage de points considéré.

On considère des gains, ou coefficients de pondération, $\alpha_1$, $\alpha_2$ et $\alpha_3$. A l'instant t, pour un objet donné, la position $\mu_i(t)$ de l'objet est mise à jour en fonction de la position à l'instant (t-1) de cet objet et de l'évènement e(x,t) qui a été déterminé à l'étape E3 comme appartenant au nuage de points représentant cet objet:

$$\mu_i(t) = \alpha_1 . \mu_i(t-1) + (1- \alpha_1).x$$

La matrice de covariante $\Sigma_i(t)$ du nuage de points à l'instant considéré t est mise à jour en fonction de la matrice de covariante $\Sigma_i(t-1)$ à l'instant (t-1) :

$$\Sigma_i(t) = \alpha_2 .\Sigma_i(t-1) + (1 - \alpha_2).\Delta\Sigma_i.$$

Dans cette formule, $\Delta\Sigma_i$ est la différence de covariance calculée à partir de la position courante $\mu_i(t)$ du nuage de points et de la position de l'évènement e(x,t) qui a été déterminé à l'étape E3 comme appartenant au nuage de points.

$$\Delta\Sigma_i = \begin{bmatrix} \left(x_1 - \mu_{i1}(t)\right)^2 & \left(x_1 - \mu_{i1}(t)\right).\left(x_2 - \mu_{i2}(t)\right) \\ \left(x_1 - \mu_{i1}(t)\right).\left(x_2 - \mu_{i2}(t)\right) & \left(x_2 - \mu_{i2}(t)\right)^2 \end{bmatrix}$$

Selon une variante de réalisation, la vitesse du nuage de point considéré est en outre déterminée et mise à jour. Il s'agit de la vitesse dans le plan image en pixel par seconde.

A l'instant t, le vecteur vitesse $v_i(t) = [v_{i1}(t), v_{i2}(t)]^T$ est déterminé selon la formule :

$$v_i(t) = \alpha_3 .v_i(t-1) + (1- \alpha_3).( \mu_i(t)- \mu_i(t-1))/\Delta t$$

où $\Delta t$ est la différence entre les instants t et (t-1).

Ces calculs de détermination de position, matrice de covariance et éventuellement vitesse de nuage de point sont répétés pour tous les évènements qui ont été déterminés comme appartenant au nuage de points à l'étape E3. Ils sont également répétés pour chaque nuage de points pour lequel il a été déterminé qu'un évènement lui appartient à l'étape E3.

L'étape suivante E5 est le calcul de la taille et de l'orientation de l'au moins un objet en fonction des informations mises à jour. Ce calcul est effectué pour tous les objets pour lesquels les informations ont été mises à jour à l'étape E4.

L'objet est modélisé par une ellipse. Les demis axes a et b et l'orientation $\alpha$ de l'ellipse sont déterminées en fonction de la matrice de covariance $\Sigma_i(t)$ calculée à l'étape E4.

On détermine tout d'abord deux grandeurs $\lambda_{max}$ et $\lambda_{min}$ de la manière suivante :

$$\lambda_{max} = \frac{1}{2}.\left( \sigma_1^2 + \sigma_2^2 + \sqrt{\left(\sigma_1^2 - \sigma_2^2\right)^2 + 4.\sigma_{12}^2} \right)$$

$$\lambda_{min} = \frac{1}{2}.\left( \sigma_1^2 + \sigma_2^2 - \sqrt{\left(\sigma_1^2 - \sigma_2^2\right)^2 + 4.\sigma_{12}^2} \right)$$

Les demis axes a et b et l'orientation $\alpha$ de l'ellipse sont ensuite calculée selon les formules :

$$a = \sqrt{\lambda_{\max}}$$

$$b = \sqrt{\lambda_{\min}}$$

$$\alpha = \frac{1}{2}.\arctan\left(\frac{2.\sigma_{12}}{\sigma_2^2 - \sigma_1^2}\right)$$

L'étape suivante E6 est un affichage de l'objet ou des objets dont la position, la taille et l'orientation ont été déterminées, sur un écran d'affichage. Si les traitements des étapes précédentes sont effectués sur les données qui ont été modifiées entre les instants (t-1) et t, l'affichage est de préférence un affichage de tous les objets, même ceux qui n'ont pas été modifiés par les traitements précédents.

L'étape E6 est facultative.

Il est à noter que le suivi d'objet a été exposé pour un système à deux dimensions. Cependant, il est possible d'effectuer le suivi d'objet selon l'invention en trois dimensions.

Pour cela, une calibration permet de lier une modification de la taille de la gaussienne à la taille de l'objet. Connaissant la taille de l'objet suivi, on déduit ensuite sa profondeur, c'est-à-dire s'il s'éloigne ou s'il s'approche du capteur, à partir de la variation des paramètres de la gaussienne.

L'ensemble des traitements exposés est réalisé de manière itérative, de sorte que la position, la taille et l'orientation d'un objet sont calculées et actualisées dès que le capteur asynchrone fournit des données représentant un jeu d'événements spatio-temporels affectant cet objet.

Comme on l'a vu, les évènements sont fournis par le capteur asynchrone à une résolution temporelle très fine, par exemple 1 $\mu$s. La fréquence des traitements exposés plus haut est donc supérieure à 1 kHz.

La **figure 4** représente un mode de réalisation particulier de dispositif de suivi visuel d'au moins un objet, selon l'invention.

Le dispositif de suivi visuel d'au moins un objet représenté par un nuage de points auxquels sont associées des informations comporte :

- des moyens de réception de données représentant un jeu d'événements spatio-temporels,
- des moyens de détermination de la probabilité qu'un évènement du jeu appartienne au nuage de points représentant l'au moins un objet, pour chaque évènement du jeu reçu par les moyens de réception,
- des moyens de détermination du fait qu'un évènement appartient ou non au nuage de points en fonction de la probabilité déterminée pour l'évènement considéré,
- des moyens de mise à jour des informations associées au nuage de point de l'au moins un objet, lorsqu'il a été déterminé qu'au moins un évènement appartient au nuage de points,
- des moyens de calcul de la position, de la taille et de l'orientation de l'au moins un objet en fonction des informations mises à jour.

Le dispositif de suivi visuel d'au moins un objet a la structure générale d'un ordinateur. Il comporte notamment un processeur 100 exécutant un programme d'ordinateur mettant en œuvre le procédé selon l'invention, une mémoire 101, une interface d'entrée 102 et une interface de sortie 103.

Ces différents éléments sont classiquement reliés par un bus 105.

L'interface d'entrée 102 est reliée à un capteur asynchrone 90 et est destinée à recevoir les données représentant un jeu d'événements spatio-temporels.

Le processeur 100 exécute les traitements précédemment exposés. Ces traitements sont réalisés sous la forme d'instructions de code du programme d'ordinateur qui sont mémorisées par la mémoire 101 avant d'être exécutées par le processeur 100.

La mémoire 101 mémorise également les informations des nuages de points traités selon l'invention.

L'interface de sortie 103 est reliée à un écran d'affichage 104 pour afficher l'objet.

Il est à noter que tout type de densité de probabilité peut être utilisé à la place de la gaussienne dans le cadre de l'invention. Par exemple, on peut envisager des distributions aléatoires et toute somme de gaussienne et de dérivée de gaussienne non limitée dans l'ordre de la puissance et de la dérivée en tenant compte de toutes les orientations possibles.

Les applications potentielles de l'invention sont les pinces optiques, le microassemblage , la microrobotique et la téléopération avec force aux petites échelles. De même, des domaines comme la robotique mobile, aérienne ou humanoïde sont des applications potentielles ainsi que le filtrage particulaire.

**Revendications**

1. Procédé de suivi visuel d'au moins un objet représenté par un nuage de points auxquels sont associées des informations, comportant les étapes de :

    - réception (E1) de données représentant un jeu d'évènements spatio-temporels,
    - détermination (E2) de la probabilité qu'un évènement du jeu appartienne au nuage de points représentant l'au moins un objet, pour chaque évènement du jeu reçu,
    - détermination (E3) du fait qu'un évènement appartient ou non au nuage de points en fonction de la probabilité déterminée pour l'évènement considéré, pour chaque évènement du jeu reçu,
    - mise à jour (E4) des informations associées au nuage de points de l'au moins un objet, pour chaque évènement pour lequel il a été déterminé à l'étape précédente qu'il appartient au nuage de points, **caractérisé en ce que**

    l'étape de mise à jour comporte la mise à jour de la position de l'au moins un objet en fonction de la position à l'instant précédent de l'au moins un objet et de l'évènement déterminé à l'étape précédente comme appartenant au nuage de points représentant l'au moins un objet, et **en ce qu'**il comporte en outre l'étape de

    - calcul (E5) de la taille et de l'orientation de l'au moins un objet en fonction des informations mises à jour.

2. Procédé de suivi visuel d'au moins un objet selon la revendication 1, **caractérisé en ce que** le jeu d'évènements spatio-temporels est fourni par un capteur asynchrone (90).

3. Procédé de suivi visuel d'au moins un objet selon la revendication 1 ou 2, **caractérisé en ce que** la détermination (E3) du fait qu'un évènement appartient ou non au nuage de points comporte la comparaison de la probabilité déterminée pour l'évènement considéré avec un seuil prédéterminé.

4. Procédé de suivi visuel d'au moins un objet selon l'une quelconque des revendications 1 à 3, **caractérisé en ce que** la taille et l'orientation de l'au moins un objet sont calculées (E5) en modélisant l'objet par une ellipse et en calculant ses demis axes et son orientation.

5. Procédé de suivi visuel d'au moins un objet selon l'une quelconque des revendications 1 à 4, **caractérisé en ce qu'**il comporte en outre la détermination de la vitesse de l'au moins un objet.

6. Procédé de suivi visuel d'au moins un objet selon l'une quelconque des revendications 1 à 5, **caractérisé en ce que** les étapes de réception, détermination, mise à jour et calcul sont effectuées de manière itérative.

7. Procédé de suivi visuel d'au moins un objet selon l'une quelconque des revendications 1 à 6, **caractérisé en ce qu'**il comporte en outre l'étape d'affichage (E6) de données représentatives de la position, de la taille et de l'orientation de l'au moins un objet calculées en fonction des informations mises à jour.

8. Dispositif de suivi visuel d'au moins un objet représenté par un nuage de points auxquels sont associées des informations, comportant :

    - des moyens de réception de données représentant un jeu d'événements spatio-temporels,
    - des moyens de détermination de la probabilité qu'un évènement du jeu appartienne au nuage de points représentant l'au moins un objet, pour chaque évènement du jeu reçu par les moyens de réception,
    - des moyens de détermination du fait qu'un évènement appartient ou non au nuage de points en fonction de la probabilité déterminée pour l'évènement considéré, pour chaque évènement du jeu reçu par les moyens de réception,
    - des moyens de mise à jour des informations associées au nuage de points de l'au moins un objet, pour chaque évènement pour lequel il a été déterminé qu'il appartient au nuage de points, **caractérisé en ce que** les moyens de mise à jour sont adaptés à mettre à jour la position de l'au moins un objet en fonction de la position à l'instant précédent de l'au moins un objet et de l'évènement déterminé comme appartenant au nuage de points représentant l'au moins un objet, et **en ce qu'**il comporte en outre

- des moyens de calcul de la taille et de l'orientation de l'au moins un objet en fonction des informations mises à jour.

9. Programme d'ordinateur comportant des instructions pour l'exécution des étapes du procédé selon l'une quelconque des revendications 1 à 7 lorsque ledit programme est exécuté par un ordinateur.

10. Support d'enregistrement lisible par un ordinateur sur lequel est enregistré un programme d'ordinateur comprenant des instructions pour l'exécution des étapes du procédé selon l'une quelconque des revendications 1 à 7.

**Patentansprüche**

1. Verfahren zur visuellen Verfolgung von mindestens einem Objekt, das durch eine Wolke von Punkten dargestellt wird, mit denen Informationen verknüpft sind, umfassend die folgenden Schritte:

   - Empfang (E1) von Daten, die einen Satz von raumzeitlichen Ereignissen darstellen,
   - Bestimmung (E2) der Wahrscheinlichkeit, dass ein Ereignis des Satzes zu der Wolke von Punkten gehört, die das mindestens eine Objekt darstellt, für jedes Ereignis des empfangenen Satzes;
   - Bestimmung (E3), ob ein Ereignis zur Wolke von Punkten gehört oder nicht, in Abhängigkeit von der Wahrscheinlichkeit, die für das betrachtete Ereignis bestimmt wurde, für jedes Ereignis des empfangenen Satzes,
   - Aktualisierung (E4) der Informationen, die mit der Wolke von Punkten des mindestens einen Objekts verknüpft sind, für jedes Ereignis, für das im vorherigen Schritt festgestellt wurde, dass es zur Wolke von Punkten gehört, **dadurch gekennzeichnet, dass**

   der Schritt der Aktualisierung die Aktualisierung der Position des mindestens einen Objekts umfasst, in Abhängigkeit von der Position des mindestens einen Objekts zum vorherigen Zeitpunkt, und von dem Ereignis, für das im vorhergehenden Schritt bestimmt wurde, das es zur Wolke von Punkten gehört, welche das mindestens eine Objekt darstellt, und dadurch, dass es weiter den folgenden Schritt umfasst:

   - Berechnung (E5) der Größe und Ausrichtung des mindestens einen Objekts gemäß den aktualisierten Informationen.

2. Verfahren zur visuellen Verfolgung mindestens eines Objekts nach Anspruch 1, **dadurch gekennzeichnet, dass** der Satz von raumzeitlichen Ereignissen von einem asynchronen Sensor (90) bereitgestellt wird.

3. Verfahren zur visuellen Verfolgung mindestens eines Objekts nach Anspruch 1 oder 2, **dadurch gekennzeichnet, dass** die Bestimmung (E3), ob ein Ereignis zur Wolke von Punkten gehört oder nicht, den Vergleich der für das betrachtete Ereignis ermittelten Wahrscheinlichkeit mit einem vorgegebenen Schwellenwert umfasst.

4. Verfahren zur visuellen Verfolgung mindestens eines Objekts nach einem der Ansprüche 1 bis 3, **dadurch gekennzeichnet, dass** die Größe und Ausrichtung des mindestens einen Objekts berechnet werden (E5), indem das Objekt durch eine Ellipse modelliert wird und deren Halbachsen und deren Ausrichtung berechnet werden.

5. Verfahren zur visuellen Verfolgung mindestens eines Objekts nach einem der Ansprüche 1 bis 4, **dadurch gekennzeichnet, dass** es ferner das Bestimmen der Geschwindigkeit des mindestens einen Objekts umfasst.

6. Verfahren zur visuellen Verfolgung mindestens eines Objekts nach einem der Ansprüche 1 bis 5, **dadurch gekennzeichnet, dass** die Schritte des Empfangs, der Bestimmung, der Aktualisierung und der Berechnung iterativ ausgeführt werden.

7. Verfahren zur visuellen Verfolgung mindestens eines Objekts nach einem der Ansprüche 1 bis 6, **dadurch gekennzeichnet, dass** es ferner den Schritt der Anzeige (E6) von Daten umfasst, die für die Position, die Größe und die Ausrichtung des mindestens einen Objekts repräsentativ sind, die in Abhängigkeit von den aktualisierten Informationen berechnet wurden.

8. Vorrichtung zur visuellen Verfolgung von mindestens einem Objekt, das durch eine Wolke von Punkten dargestellt ist, mit denen Informationen verknüpft sind, umfassend:

- Empfangsmittel für Daten, die einen Satz von raumzeitlichen Ereignissen darstellen,
- Bestimmungsmittel für die Wahrscheinlichkeit, dass ein Ereignis des Satzes zu der Wolke von Punkten gehört, die das mindestens eine Objekt darstellt, für jedes Ereignis des Satzes, das von den Empfangsmitteln empfangen wird,
- Mittel zum Bestimmen, ob ein Ereignis zur Wolke von Punkten gehört oder nicht, in Abhängigkeit von der für das betrachtete Ereignis bestimmten Wahrscheinlichkeit, für jedes Ereignis des Satzes, das von den Empfangsmitteln empfangen wird,
- Aktualisierungsmittel für die Informationen, die mit der Wolke von Punkten des mindestens einen Objekts verknüpft sind, für jedes Ereignis, für das festgestellt wurde, dass es zur Wolke von Punkten gehört, **dadurch gekennzeichnet, dass**

die Aktualisierungsmittel dazu angepasst sind, die Position des mindestens einen Objekts zu aktualisieren, in Abhängigkeit von der Position des mindestens einen Objekts zum vorhergehenden Zeitpunkt, und von dem Ereignis, für das bestimmt wurde, dass es zur Wolke von Punkten gehört, die das mindestens eine Objekt darstellt, und dadurch, dass sie weiter umfasst

- Berechnungsmittel für die Position, Größe und Ausrichtung des mindestens einen Objekts in Abhängigkeit von den aktualisierten Informationen.

9. Computerprogramm, umfassend Anweisungen zum Ausführen der Schritte des Verfahrens gemäß einem der Ansprüche 1 bis 7, wenn das Programm von einem Computer ausgeführt wird.

10. Computerlesbares Aufzeichnungsmedium, auf dem ein Computerprogramm aufgezeichnet ist, das Anweisungen zur Ausführung der Schritte des Verfahrens gemäß einem der Ansprüche 1 bis 7 umfasst.

**Claims**

1. Method for visual tracking of at least one object represented by a cluster of points with which information is associated, including steps to:

   - receive (E1) data representing a set of space-time events,
   - determine (E2) the probability that an event in the set belongs to the cluster of points representing the at least one object, for each event in the received set,
   - determine (E3) whether or not an event belongs to the cluster of points as a function of the determined probability for the event considered, for each event in the received set,
   - update (E4) information associated with the cluster of points for at least one object, for each event for which it was determined in the previous step that it belongs to the cluster of points, **characterised in that**

   The step of updating includes the updating of the position of the at least one object as a function of the position at the previous time of the at least one object and the event determined at the previous step as belonging to the cluster of points representing the at least one object, and **in that** it further includes the step to

   - calculate (E5) the size and orientation of the at least one object as a function of the updated information.

2. Method for visual tracking of at least one object according to claim 1, **characterised in that** the set of space-time events is provided by an asynchronous sensor (90).

3. Method for visual tracking of at least one object according to claim 1 or 2, **characterised in that** the determination (E3) of whether or not an event belongs to the cluster of points includes the comparison of the determined probability for the considered event with a predetermined threshold.

4. Method for visual tracking of at least one object according to any one of claims 1 to 3, **characterised in that** size and orientation of the at least one object are calculated (E5) by modelling the object by an ellipse and calculating its half axes and its orientation.

5. Method for visual tracking of at least one object according to any one of claims 1 to 4, **characterised in that** it also comprises determination of the speed of the at least one object.

6. Method for visual tracking of at least one object according to any one of claims 1 to 5, **characterised in that** the reception, determination, update and calculation steps are carried out iteratively.

7. Method for visual tracking of at least one object according to any one of claims 1 to 6, **characterised in that** it also comprises the step to display (E6) data representing the position, size and orientation of the at least one object calculated as a function of the updated information.

8. Device for visual tracking of at least one object represented by a cluster of points associated with information, **characterised in that** it comprises:

   - means of receiving data representing a set of space-time events,
   - means of determining the probability that an event in the set belongs to the cluster of points representing the at least one object, for each event in the set received by the reception means,
   - means of determining whether or not an event belongs to the cluster of points as a function of the probability determined for the event considered, for each event in the set received by the reception means,
   - means of updating information associated with the cluster of points for the at least one object, for each event for which it has been determined that it belongs to the cluster of points, **characterised in that**

   the means of updating are adapted for updating the position of the at least one object as a function of the position at the previous time of the at least one object and the event determined as belonging to the cluster of points representing the at least one object, and **in that** it further includes

   - means of calculating the size and orientation of the at least one object depending on the updated information.

9. Computer program comprising instructions for implementation of steps in the method according to any one of claims 1 to 7 when said program is run on a computer.

10. Storage medium that can be read by a computer on which a computer program is stored comprising instructions suitable for implementation of steps in the method according to any one of claims 1 to 7.

FIG. 1

FIG. 4

log ( I )

e ( x, t )

+1

−1

t

t

# FIG. 2

$b$
$a$
$\alpha$
$\mu$

# FIG. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Spatiotemporal multiple persons tracking using dynamic vision sensor. **PIATKOWSKA ; BELBACHIR ; GELAUTZ.** Computer vision and pattern recognition workshops, 2012 IEEE Computer society conférence on. IEEE, 2012
- Temporal patern-based active marker identification and tracking using a dynamic vision sensor. *Matthias Hofstetter,* 31 Janvier 2012
- **SERRANO-GOTARREDONA et al.** CAVIAR : a 45k neuron, 5M synapse, 12G Connects/s AER hardware sensory-processing-learning-actuating system for high-speed visual object récognition and tracking. *IEEE Transactions on Neural Networks,* 01 Septembre 2009, vol. 20 (9